# EUROPEAN PATENT APPLICATION

(11) **EP 1 321 881 A1**
(43) Date of publication of application: **25.06.2003**
(21) Application number: 02258548.3
(22) Date of filing: 11.12.2002
(51) Int. Cl.: G06F 17/60

(54) **Data processing system for automated commission allocation**

(30) Priority: 17.12.2001 US 23241
(71) Applicant: eSPEED, Inc., New York, New York 10022 (US)
(72) Inventor: Ginsberg, Philip M., Eastville, Virgina 23347 (US)
(74) Representative: Jones, David Colin

(57) **Abstract**

The present invention is systems and methods for implementing commission allocations in transaction management of auction-based trading for specialized items such as fixed income instruments. In accordance with these systems and methods, a plurality of workstations that are connected to a server, and a structured commission allocation protocol may be provided. Through the workstations, the server and the commission allocation protocol, the systems and methods may allocate commissions or fees when trading securities at accelerated levels with minimal errors and costs, control commission elements during real-time trading, reward customers and brokers who participate in transactions, and distribute commission and transaction data in real time.

## Description

### Field of the Invention

This invention relates to systems and methods for assisting in financial transactions. More particularly, this invention provides data processing systems and methods for calculating commissions or fees on the purchase of select classes of assets, especially fixed income securities, but also currencies, options, financial instruments, commodities, and their derivatives, as well as for providing users of such systems and methods with incentive to participate in the trading of such assets. The present invention is presented in the context of selected fixed income commission protocols during quick-transacting bid-offer trading across geographic and time-sequenced trading environments.

### Background of the Invention

Economic activity has at its centerpiece the buyer/seller transaction for all goods and services produced and consumed in a market economy. It is the fundamental mechanism to which resources are allocated to producers and output to consumers. The operation of the buyer/seller mechanism and the means by which buyer and seller are brought together often are a critical determination of economic efficiency. When operated properly, they will substantially enhance market performance.

Through history, there have been many different approaches adopted to fairly bring buyers and sellers together. The key objective of each of these approaches has been to allow transactions to be conducted at, or as close as possible to, the "market" price of the goods. By definition, the market price is the price in given currency terms that a fully educated market will transact select goods. This can generally be accomplished by permitting full access to the transaction by essentially all potential buyers and sellers. However, the buyer/seller transaction must be structured to operate at a very low cost - or it will distort the market price of goods with artificially high transaction costs. Thus, as can be seen, the two keys to promoting effective buyer/seller transactions -- full access and knowledge coupled with low costs that may include the commission or brokerage fees -- may conflict, thereby necessitating trade-offs between trading efficiency and market knowledge.

One well known and particularly successful trading system is known as the "open outcry auction". This involves a process wherein buyers and sellers collect in one location and prices for select goods are presented to the group through a broker, via simple verbal offerings. This approach has been used for almost all kinds of goods, but is particularly useful where there are no established trading locations or markets for the selected items. It is the dominant trading forum for exotic items such as rare pieces of art and the like, with buyers and sellers commissions or fees added to the price of the successful bid. Although successful in bringing interested parties to the transaction, the overall process can be expensive, adding significantly to the market-distorting transaction costs.

Open outcry auction techniques, modified over time, have also found successful application in many commodity trading activities, including the buying and selling of farm produce and livestock, oil and commodities contracts, futures contracts on a variety of items and fixed income securities. These trading activities focus on the buying and selling of essentially fungible items, that is, items that are without meaningful differentiation from like items on the market. For example, a bushel of wheat for February delivery is considered for sale and delivery at a price independent from its source. Similarly, a 30-year treasury bond paying a coupon rate of 6 3/8% and having an August 15, 2027 maturity date is indistinguishable from other 30-year treasuries having the same properties. Accordingly, the price buyers are willing to pay and sellers willing to accept defines the market price of all 30-year treasury bonds of that same vintage.

The fixed income securities issued by the United States Government are known as US Treasury Securities. These instruments typically span maturity terms at issue of 13 to 52 weeks (T-Bills), one to ten years (notes), and up to 30 years (bonds). The T-Bills are pure discount securities having no coupons. Almost all other treasuries having longer terms are coupon notes or bonds, with a defined payment cycle of semi-annual payments to the holder.

New treasury securities are auctioned by the US government at pre-established auction dates. The auction prices for the treasuries having a face value with a set coupon rate will define the issuance yields of the security. After the auction, the treasuries enter the secondary market and are traded typically "over the counter", i.e., without a defined exchange. As inflation expectations and supply and demand conditions change, the prices of the recently auctioned treasuries fluctuate on the secondary market. Newly auctioned securities are traded in conjunction with the securities issued in earlier auctions. In this context, some securities are traded more often than others and are called the "actives", the actives usually correspond to the recently issued securities as opposed to the older securities in the market. Indeed, some older securities are infrequently traded, creating an illiquid market that may or may not reflect the current market-determined interest rate for that current maturity length security.

As can be realized by the foregoing description, the very size and diversity of the treasury market implicates an unprecedented level of sophistication by market participants in the bidding, offering and selling transactions involving these securities. The very complexity associated with the transactions and the scale of trading undertaken by banks, brokers, dealers and institutional participants may necessitate a rigidly structured approach not only for trading, but also for distributing commission fees among the several participants involved in these transactions.

In the past, open outcry auction bond brokering has served its customers well, providing highly efficient executions at near perfect market pricing. The open outcry auction applied to bond trading was implemented by a broker working with a collection of customers to create and manage a market. In these auctions, customer representatives such as brokers and traders - both buyers and sellers - at a commission location (e.g., a single room) communicate with each other to develop pricing and confirm transactions. This process employs the expression by the representatives of various bid and offer prices for the fixed income security at select volumes (i.e., how many million dollars of bonds at a given maturity). This expression involves the loud oral "cry" of a customer-proposed bid or offer and the coordination with the fellow representatives regarding the extracting of complimentary positions. This loud "cry" continues until a transaction is acted upon and a deal is done. This "trade capture" process relies on after-the-fact reporting of what just transpired through the oral outcry trade.

In these settings, the trade capture process is performed by having designated clerks input data into electronic input devices. An input clerk attempts to interpret the open outcry of many individual brokers simultaneously who sequentially are making verbally known the trading instructions of their customers. The quality of the data capture is, at least in part, a function of the interpretative skills of the input clerk, and the volume and the volatility of customer orders.

A significant drawback to this type of auction data capture process is the difficulty in discerning the distinct trading instructions verbalized in rapid succession during a quickly moving market. The capture of such trading instructions is necessary so that an accurate sequence of data, including the trading environment and pattern behavior relating to the transaction, can be captured by brokers and a set of inputters. The main permutations of the trading environment and pattern behavior, will be discussed in some detail below. At this juncture, suffice to say that at the volumes of business transactions existing at the time of its development, and the lack of suitable alternatives, left open outcry as the dominant mechanism for decades. Though successful, this approach was not perfect.

Indeed, in recent years, some of the problems in an open outcry auction forum have been amplified by the vastly increased level of trading now undertaken in the fixed income field. Without attempting to be comprehensive, difficulties would occur by the injection of trader personalities into the open outcry auction process. For example, an aggressive, highly vocal representative may in fact dominate trading - and transaction flow - even though he/she may only represent a smaller and less critical collection of customers. Although such aggressive actions at open outcry auction may be beneficial to those particular customers in the short run, overall, such dominance of the trading can distort pricing away from the actual market conditions.

Other problems exist in open outcry auction that reduce efficient trading. The speed at which trading flows and the oral nature of the auction process injects a potential for human error that often translates into many millions of dollars committed to trades divergent from customer objectives. As such, the broker is left at the end of each trading day with a reconciliation process that may, under certain market conditions, wipe out most if not all associated profit, including earned commissions, from that day's trading.

Today, electronic matching and dealing systems have found successful application in many trading activities, including the buying and selling of a variety of items including goods, services, and currency. Many of these trading activities focus on the buying and selling of essentially fungible items, that is, items that are without meaningful differentiation from like items on the market. There have been many past efforts to incorporate computers into trading support for select application and securities. Indeed, almost all trading today involves some computer support, from simple information delivery to sophisticated trading systems that automate transactions at select criteria. However, these systems have not significantly impacted the issues of formalizing in a data processing system the commissions or fees charged to buyers and sellers who participate in trading processes through their transactions.

In view of the foregoing, it would be desirable to provide systems and methods for implementing commission allocations in transaction management of items being traded such as fixed income instruments.

### Summary of the Present Invention

It is, therefore, an object of the present invention to provide a data processing system supporting a transaction-enabling process for allocating commissions or fees when trading securities at accelerated levels with minimal errors and costs, and rewarding customers who participate in such trades.

The above and other objects of the present invention are realized in a specifically delineated computer-based, data processing system having a governing program controlled logic for orchestrated management of commission allocation functionality. The data processing employs a plurality of trading workstations linked with a server for coordinated data flow and processing. Communication may be provided by a computer network, such as an Ethernet, token ring, token bus, or other hierarchical intranet LAN and/or WAN configuration. The system preferably includes a dedicated keypad for input from each workstation. Control logic dictates the available commission ventures options and screen displays for each workstation. The screen displays for each workstation could also be controlled using logic in or connected to the workstation. As trades are completed, the system assigns commissions and/or rewards to the customers who participate in select trades.

In accordance with a preferred embodiment of the present invention, the control logic provides a set of three states for each participant. Although, three states are illustrated, the present invention may be implemented with additional or fewer states in accordance with the present invention. The three states are listed in Table 1:

**Table 1**

| | |
|---|---|
| 1. | Entity Identification State |
| 2. | Environment State |
| 3. | Behavior Pattern State |

As the various buy and sell transactions are computed, the transactions possess attributes relating to all three states. These attributes are stored and used to parse and update a commission vector that controls the allocation of commissions specific to securities being traded in real-time. The Entity Identification State determines the first set of commission options available to that trade - and thus enables controlling the flow of trades in a cost-efficient and substantially error-free manner for back office processing. The Environment and Behavior Pattern States account mainly for trade information that provides a basis for rewarding customers who participate in different trades, who trade in less active instruments, and who trade during less active times or from less active locations, thereby providing liquidity to the market. As all participants implement trading on configured workstations, the commission protocols are set outside the control of individual execution traders and brokers, thereby precluding aggressive control of transactions through select commission cutting.

The present system can be used for the commission allocation of various financial products, such as futures, commodities, indices, and the like.

### Brief Description of the Drawings

The above and other objects and advantages of the invention will be apparent upon consideration of the following detailed description, taken in conjunction with the accompanying drawings, in which like reference characters refer to like parts throughout, and in which:
FIG. 1 is a block diagram of a system that may be used to implement the processes and functions of certain embodiments of the present invention;
FIG. 2 is a block diagram of a server that includes the processors that may be used to implement the processes and functions of certain embodiments of the present invention;
FIG. 3 is a flow diagram of an order process that may be used in the execution of a trade in accordance with certain embodiments of the present invention;
FIG. 4 is a flow diagram of a post-trade completion process that may be used to gather information regarding the various system states that may be pertinent to allocating the commission or reward on a trade in accordance with certain embodiments of the present invention;
FIG. 5 is a representation of a commission vector that may be used to organize and store trade information used to allocate the commission or reward on a trade in accordance with certain embodiments of the present invention;
FIG. 6 is a flow diagram of a command vector process that may be used to provide for screen display of all trade attributes for auditing and cancel and correct rebilling in accordance with certain embodiments of the present invention; and
FIG. 7 is a flow diagram of a commission calculation process that may be used to calculate the commission or reward on a trade in accordance with certain embodiments of the present invention.

### Detailed Description of the Invention

The present invention is directed to a data processing system for implementing complex commission allocation rules in support of select transactions. The first aspect of the system relates to a hardware arrangement that provides a specifically tailored platform for processor enhanced and supported completion of trading and commission allocation for back office processing. The second aspect of the invention relates to a governing logic for controlling system dynamics. This logic is stored in system memory and provides the sequence of protocols and rules that allocate a commission and/or a reward upon completion of a transaction.

The control logic is critical on two levels. First, it is important as the guiding principles underlying the system and thus performance is tied directly thereto. On a second level, control logic must be known to all customers and brokers as the rules determine final settlement cost or receipt. This eliminates any confusion and places participants on as knowledgeable a footing as possible. It is a fundamental precept of the present system to provide fair and accurate accounting of the commissions in the trading process, to which registered participants are entitled.

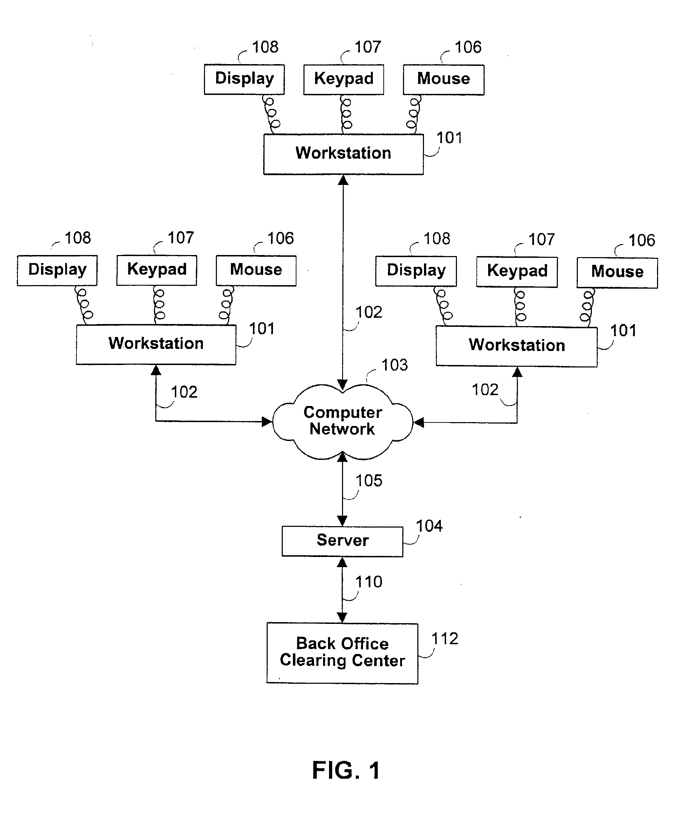

Referring to FIG. 1, an exemplary system 100 for implementing the present invention is shown. As illustrated, system 100 may include one or more trading workstations 101 that may include a mouse 106, a keypad 107, and a display 108. Workstations 101 may be local or remote, and are connected by one or more communications links 102 to a computer network 103 that is linked via a communications link 105 to a server 104.

In system 100, server 104 may be any suitable server, processor, computer, or data processing device, or combination of the same. Computer network 103 may be any suitable computer network including the Internet, an intranet, a wide-area network (WAN), a local-area network (LAN), a wireless network, a digital subscriber line (DSL) network, a frame relay network, an asynchronous transfer mode (ATM) network, a virtual private network (VPN), or any combination of any of the same. Communications links 102 and 105 may be any communications links suitable for communicating data between workstations 101 and server 104, such as network links, dial-up links, wireless links, hard-wired links, etc. Each workstation enables a participant to engage in the trading process. Workstations 101 may be personal computers, laptop computers, mainframe computers, dumb terminals, data displays, Internet browsers, Personal Digital Assistants (PDAs), two-way pagers, wireless terminals, portable telephones, etc., or any combination of the same.

A back office clearing center 112 may also be connected to server 104 of the trading system via communications link 110. Clearing center 112 may be any suitable equipment, such as a computer, or combination of the same, for causing trades to be cleared and/or verifying that trades are cleared.

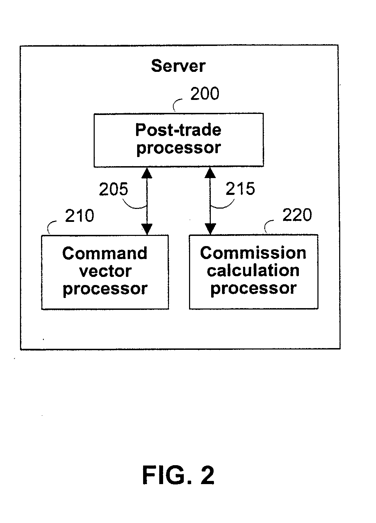

The server, depicted by 104 in FIG. 1, may contain multiple processors, as depicted in FIG. 2. A preferred embodiment server 104 implements the control logic mentioned above. Server 104 may contain a post-trade processor 200, a command vector processor 210, and a commission calculation processor 220. Once a trade is completed, post-trade processor 200 has the role of collecting different information gathered from the Entity Identification, Environment and Behavior Pattern states mentioned above, from which it parses and completes a commission vector as will be shown below.

Post-trade processor 200 may communicate with command vector processor 210 and commission calculation processor 220 through links 205 and 215 respectively. Command vector processor 210 may display the trade attributes, which are gathered as shown below, on the workstation displays shown in FIG. 1, through computer network 103, via link 105 both also shown in FIG. 1. Commission calculation processor 220 may assign price increments reflecting the amount of commission charged, to the transaction. The processors mentioned in this paragraph may implement the control logic which is responsible for assigning transaction commissions and attaining the objectives of this invention.

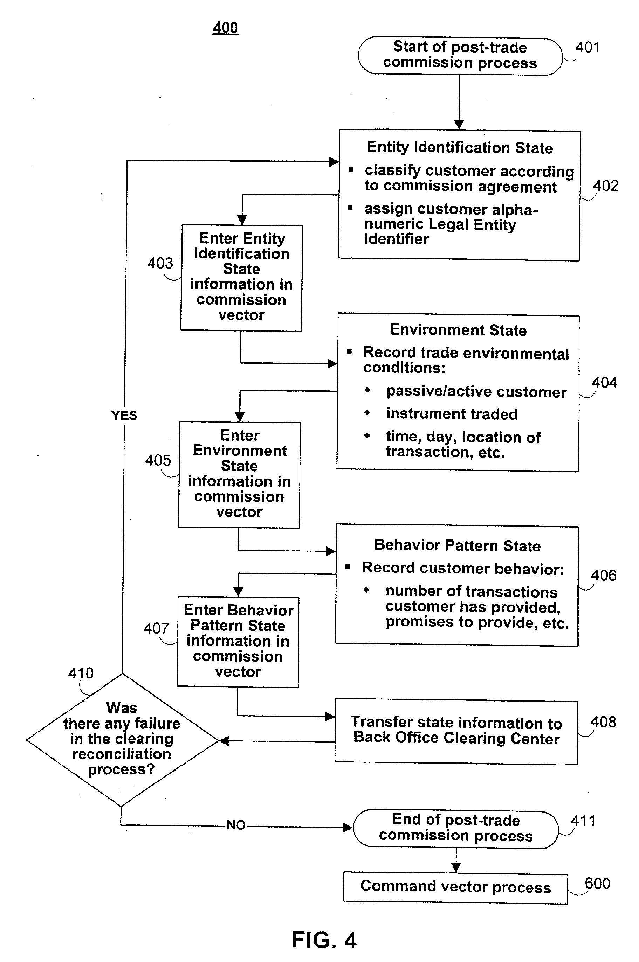

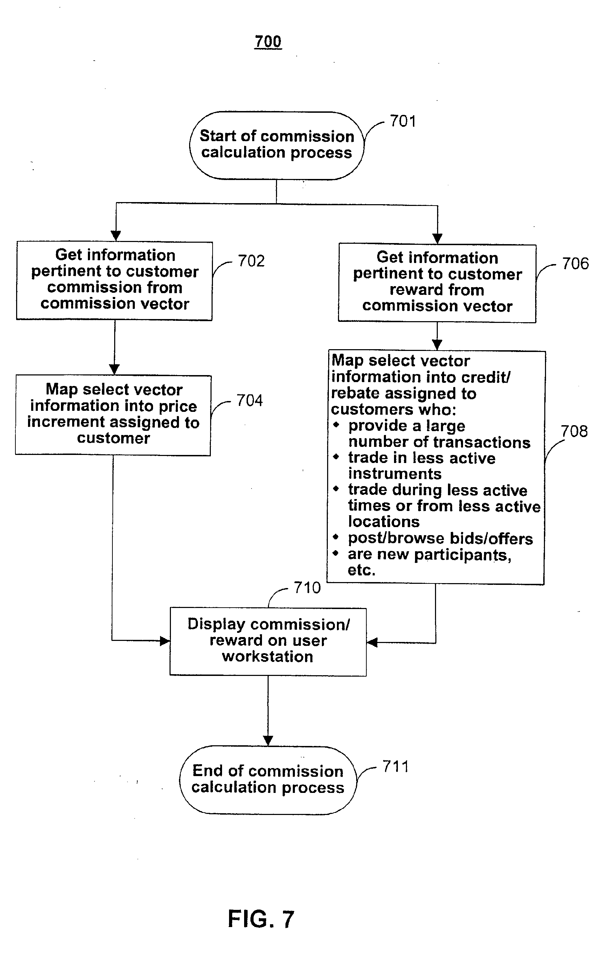

The processors mentioned above need not be linked together as described above. In addition, the number of processors in server 104 need not be limited to exactly three. For example, in another embodiment, server 104 may consist of a single processor whose task is only to perform that of the post-trade processor, as described in FIG. 4, or whose is task is simply to perform that of commission calculation processor 220, as described in FIG. 7.

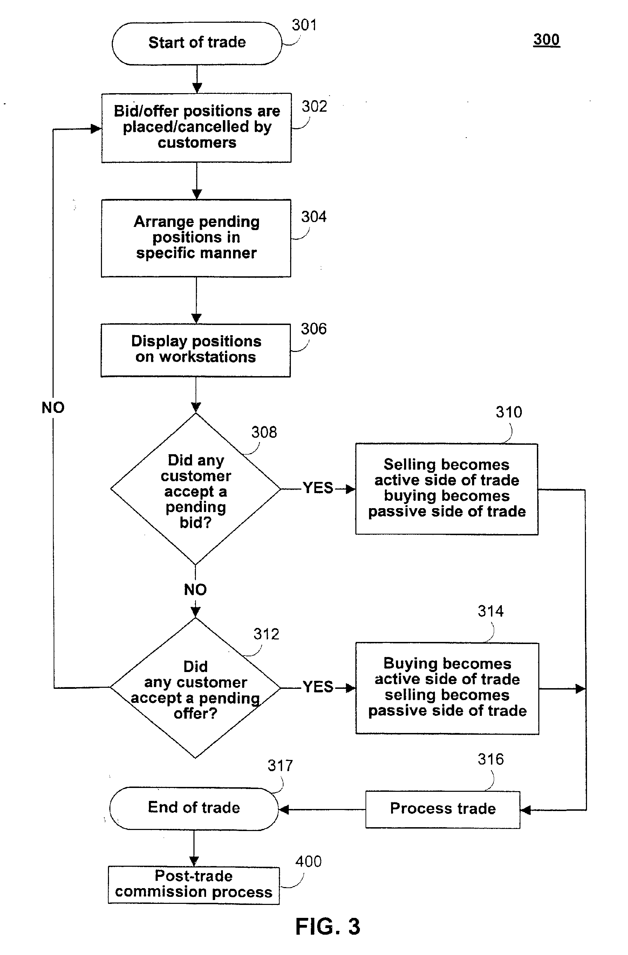

An example of an order process 300 in accordance with an embodiment of the present invention is shown in FIG. 3. Once process 300 starts at step 301, customers or "makers" may contact brokers and/or place "bids" or "offers" for a defined class of securities, at step 302. A "bid" is a dollar amount offered to buy a security issue. An "offer" is a dollar amount offered to sell a security issue. Typically, there is a small difference between the bid price and the offer price, known as the "spread". When there is no difference between the bid price and the offer price, it is considered a "locked" market.

Next, process 300 may arrange at step 304 the specific way to display the bid and offer positions and, at step 306, may display the positions on workstations shown in FIG. 1. Arranging step 304 arranges the positions that are still pending to display on the screen at the broker's workstation in priority according to a pre-programmed protocol. A customer can establish trading priority by placing a bid or offer at a select price and volume. The ranking may be based upon time of submission, price, or any other suitable criterion. By way of example, the highest bid may be displayed on the screen above other bids, and bids at the same price may be displayed in the time order in which they enter the system.

Once the bid and offer positions are displayed on the workstations, they may be accepted by a customer. Process 300 then determines whether any customer has accepted a pending bid at step 308 or a pending offer at step 312. A customer who accepts a bid or an offer is promoted to a new level known as an "aggressor" and defines the active side of the trade. If a customer accepts a pending bid, the aggressor is said to have submitted a "hit". In such a case, selling becomes the active side of the trade and buying turns passive at step 310. If a customer accepts a pending offer, the aggressor is said to have submitted a "lift". In such a case, buying becomes the active side of the trade and selling turns passive at step 314. Logic keeps track of both active and passive sides of the transaction.

The above-noted delineation between active and passive sides is critical to commission allocation as will be seen below and in the following figures. By convention, the active side typically pays commissions on the ensuing transactions. This allocation of commissions is premised on the notion that the active customers are taking advantage of the liquidity, while the passive side is supplying liquidity to the market.

After a customer accepts a pending bid or a pending offer, the trade may be processed at step 316. Trade processing at step 316 may be as implemented by systems and methods such as those described in co-pending commonly assigned U.S. patent application 09/553,423, filed April 19, 2000, which is hereby incorporated by reference herein in its entirety, or by other suitable systems or methods. Once the trade is processed, process 300 may terminate at step 317, and logic may transfer the processing to the post-trade processor at step 400 as described in FIG. 4. If no customers accepts a pending bid at step 308 or a pending offer at step 312, a trade will not be executed and the display on the screen will remain the same unless a customer places or changes a bid or offer at step 302.

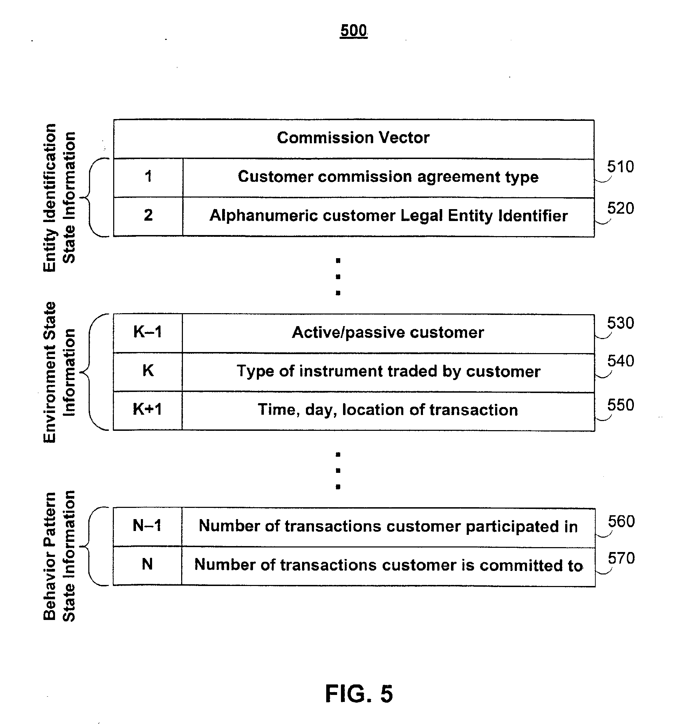

Referring to FIG. 4, process 400 is an example of the logic that may be implemented by the post-trade processor shown in FIG. 2. The post-trade processor may control the processing of commission for a trade once the transaction is completed. After post-trade commission process 400 has begun at step 401, logic may provide for a particular set of states during which information regarding the trade commission and reward is gathered, and the commission vector described above and shown in FIG. 5 is parsed. An Entity Identification State at step 402 may reflect the overall agreement with the customer. In this state, customers may be classified according to their type of commission agreement. For example, some customers may have an agreement for a flat rate for their commissions. These customers would be charged the same commission regardless of the number of transactions they make. The Entity Identification State for these customers would reflect a "Master Agreement" type relationship and their commission rate. Other customers may have to pay a commission for each transaction. The Entity Identification State for these customers would reflect a "Transaction" type relationship and their commission rate.

During the Entity Identification State, customers may be assigned an alphanumeric Legal Entity Identifier. This identifier is used as a reference through the commission determination process to identify the particular customer to whom the trade is assigned. The Legal Entity Identifier is an attribute of the trade that may form an element of the commission vector. At step 403, logic may enter the state information gathered at step 402 in the commission vector.

After entity identification at step 402, logic may acquire trade attributes from an Environment State at step 404 and a Behavior Pattern State at step 406. The Environment State at step 404 may reflect the environmental conditions under which a trade is made. For example, this state may account for whether the customer was passive or active in the transaction. This information can be used to allocate commissions and rewards to the entitled customers. This state may also account for the particular class of instrument being traded (e.g. bond, currency, option, etc.), thereby providing a basis to reward customers who trade in less active instruments. Other environmental conditions that may be considered in this step include the time of day of the transaction, the day of the transaction, the customer trading location, the customer's method of accessing the system, whether there is a spread in the transaction, etc. Moreover, it may be necessary to identify at least one or more of the information gathered at step 405, in order to properly verify and allocate the commissions to which customers are entitled. At step 405, logic may enter the state information gathered at step 404 in the commission vector.

The Behavior Pattern State at step 406 may reflect customer behavioral conditions. This state may account for any appropriate benefit that a customer has provided or promises to provide in the future. For example, this state may account for the number of transactions a customer has provided, number of transactions a customer promises to provide in the future, customer's support for another project, etc. At step 407, the logic may enter the state information gathered at step 406 in the commission vector.

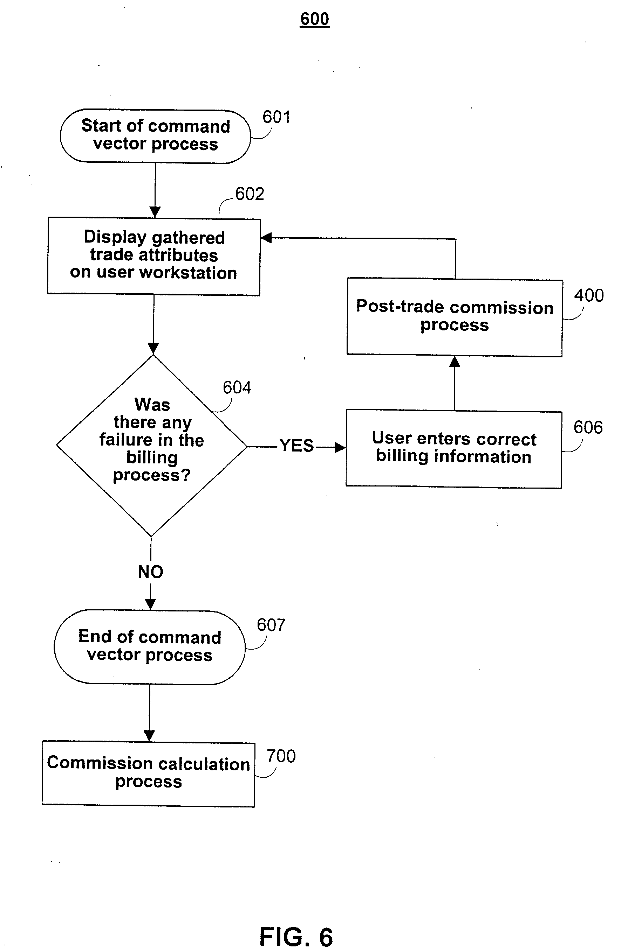

Upon completion of the Entity Identification State at step 402, the Environment State at step 404 and the Behavior Pattern State at step 406, logic may transfer state information to the back office clearing center for clearing at reconciliation step 408. At step 410, if process 400 determines that there was a failure in the clearing reconciliation process, then process 400 may re-step through the Entity Identification State, the Environment State and the Behavior Pattern State, at steps 402, 404 and 406 respectively. The commission vector may be updated accordingly at steps 403, 405 and 407 respectively. If process 400 determines at step 410 that there are no failures in the clearing reconciliation process, then process 400 may terminate at step 411, and logic may transfer the processing to the command vector processor at step 600, as described in FIG. 6.

System logic may gather information in any number of states or in any combination or order of states mentioned above. In addition, the amount of trade information or order in which logic gathers trade information within a specific state need not be as depicted in the figures or as described above. For example, it may be sufficient for logic to gather information from the Environment State prior to the Entity Identification State, without gathering any information from the Behavior Pattern State. In another embodiment, logic may only provide for one state in which the day of the transaction is registered prior to assigning a customer Legal Entity Identifier, and in which no other trade information is gathered.

As shown in FIG. 4, trade and commission information identified at each of the Entity Identification State, the Environment State and the Behavior Pattern State may be entered into and used to parse the commission vector 500 shown in FIG. 5, according to a preferred embodiment of the present invention. Commission vector 500 may be an n-tuple of alphanumeric elements that may be used to allocate the commission of a trade and reward customers who participate in trades.

The elements in the commission vector may represent trade and commission information identified by the three states depicted in FIG. 4. For example, element 510 may store the commission agreement specific to a customer or broker. Element 520 may store the customer alphanumeric Legal Entity Identifier. Element 530 may store weather the customer was on the active or passive side of the trade. Element 540 may store the type of financial instrument that was traded. Element 550 may store the time, the day, the location of the transaction, or a combination thereof. Element 560 may store the number of transactions that the customer participated in. Element 570 may store the number of transactions the customer is committed to.

In another embodiment, the commission information gathered at the different states described above is stored in the system or server memory instead of being mapped into a commission vector for processing. Creating an alphanumeric commission vector simply facilitates processing, storing and distributing such information. On the other hand, logic may characterize information based on the different transaction attributes defined in each state and assign commissions or rewards based on such characterization stored in the system.

Information about trade progress and trade participants may be transferred under control logic to the command vector processor shown in FIG. 2. Referring to FIG. 6, process 600 is an example of the logic that may be implemented by the command vector processor. Command vector processor may provide for screen display of all attributes of the trade for auditing and, if necessary, canceling and correct rebilling. After command vector process 600 has begun at step 601, logic may provide for screen display of the attributes of the trade gathered and identified in the commission vector.

More particularly, logic may transfer trade and commission information gathered in the commission vector through the computer network to the displays shown in FIG. 1 at the customers' workstations at step 602. If the customers determine that there was a failure in the billing process at step 604, they enter the trade information they believe to be correct at step 606, through their keypad shown in FIG. 1. In that case, process 600 may re-step the post-trade commission process at step 400 as shown in FIG. 3. State information may be gathered again, and displayed to the customers for auditing and, if necessary, canceling and correct rebilling at step 602 of process 600. If the customers determine that there was no failure in the billing process at step 604, then process 600 may terminate at step 607, and logic may transfer the processing to the commission calculation processor at step 700 as described in FIG. 7.

Referring to FIG. 7, process 700 is an example of the logic that may be implemented by the commission calculation processor shown in FIG. 2. The commission calculation processor may control the assigning of price increments as well as credits and rebates to the trade transaction. After commission calculation process 700 has begun at step 701, logic may step through the commission vector elements and gather information pertinent to the calculation of the customer commission at step 702. Such information may include the customer commission agreement type, the customer Legal Entity Identifier, whether the customer was active or passive during the trade, the type of instrument that was traded, etc. Logic may then map the information gathered at step 702 into equivalent price increments which are adjoined to the customer transaction at step 704.

In some cases this price increment may be zero. For example, if the Entity Identification State information stored in the commission vector reveals that the customer has a global master agreement for a fixed annual sum of money then the marginal cost of a transaction will be either zero or the designated increment stated in the contract. Or if the Environment State information stored in the commission vector records a passive transaction, the price increment will also be zero unless overridden by another state attribute.

Similarly, logic may step through the commission vector elements and gather information pertinent to the evaluation of customer reward at step 706. Such information may include the customer Legal Entity Identifier, whether the customer was active or passive during the trade, the time of the trade, the day of the trade, the location of the trade, the number of transactions the customer participated in, or has promised to provide. Logic may then map the information gathered at step 706 into an equivalent reward in the form of a credit, a rebate, or a combination thereof at step 708.

In some cases, certain customers may participate in more transactions than other customers. Customers who participate in numerous and different trades may be identified through their Legal Entity Identifier and the instruments they trade in, which information is available in the commission vector. These customers may be granted credit points or rebates on further transactions they choose to participate in at step 708.

Other customers may trade in instruments that are generally considered less active, or in instruments that are less active at a particular time, on a particular day, or at a particular location, thereby creating greater liquidity in the market. Again, such customers may be identified through information such as their Legal Entity Identifier, the instruments they trade in, the time, day, location of the trade, etc. Such information may be mapped from the commission vector and used to grant credit points or rebates on further transactions the customers choose to participate in at step 708.

Moreover, although some customers may not carry through an completed exchange in a transaction, they may still participate in some aspects of a trade. For instance, those customers may post bids or offers, or browse through posted bids and offers in search for potential hits or lifts. In doing so, such customers may provide the market with some liquidity. Logic may characterize information based on the different transactions such customers participate in, and grant these customers credit points at step 708.

Customers who are relatively new participants in the system may be identified through their Legal Entity Identifiers and may also be granted rebates at step 708, as incentives for them to use the system more frequently.

Once a commission and/or a reward is determined and assigned, logic may display the commission and/or reward assigned to the particular customer at his/her workstation at step 710. In another embodiment, commissions and rewards may be simply determined and their recipients identified without actually receiving actual paid compensations. When actual payments are due, logic may be configured to map payment information to customers or may simply determine such payment amounts, in which case the broker or trader collects his/her payment through other means. In any case, the commission calculation process may terminate at step 711, with compensations correctly determined and their recipients identified.

It should be obvious to one of ordinary skill in the art that the present invention may be practiced in embodiments other than those illustrated herein without departing from the spirit and scope of the invention, and that the invention is only limited by the claims which follow.

## Claims

1. A data processing system for implementing a commission allocation process in transacting the purchase and sale of select items, said items having a predetermined set of characteristics, said system comprising:
a plurality of workstations for presenting trade information relating to said items;
a server programmed to support a control logic having at least one state, said at least one state being based on a set of predefined state attributes relating to said trade information, said control logic that receives said trade information from said plurality of workstations based on said state attributes, and that determines a commission based on said trade information; and
a plurality of communications links for linking said server to said workstations.

2. The data processing system of claim 1 wherein said control logic distributes said trade information and said commission to at least one of said plurality of workstations.

3. The data processing system of claim 1 further comprising:
a back office clearing center for clearing said purchase and said sale of said items; and
a communications link for linking said server to said back office clearing center.

4. The data processing system of claim 1 wherein said system is adapted to be operated by at least one customer participating in trading at least one of said items.

5. The data processing system of claim 4 wherein each one of said workstations comprises a display for presenting said trade information in order for said at least one customer to verify said trade information, and for said at least one customer to correct said trade information when at least one error in said trade information is found.

6. The data processing system of claim 4 wherein said display is adapted for presenting a commission or a reward to said at least one customer.

7. The data processing system of claim 1 wherein said at least one state comprises an Entity Identification State.

8. The data processing system of claim 7 wherein said Entity Identification State is adapted for determining a commission agreement.

9. The data processing system of claim 7 wherein said Entity Identification State is adapted for assigning a Legal Entity Identifier to a customer, said customer participating in said transacting said purchase and said sale of said items.

10. The data processing system of claim 1 wherein said at least one state comprises an Environment State.

11. The data processing system of claim 10 wherein said Environment State is adapted for determining whether a customer was active or passive during a trade of at least one of said items.

12. The data processing system of claim 10 wherein said Environment State is adapted for determining a class of items which includes at least one of said items.

13. The data processing system of claim 10 wherein said Environment State is adapted for determining the time, day, or location of a trade of said at least one of said items.

14. The data processing system of claim 1 wherein said at least one state comprises a Behavior Pattern State.

15. The data processing system of claim 14 wherein said Behavior Pattern State is adapted to determine a plurality of trades of at least one of said items in which a customer participated.

16. The data processing system of claim 14 wherein said Behavior Pattern State is adapted to determine a plurality of trades of at least one of said items to which a customer is committed.

17. The data processing system of claim 1 wherein said at least one state comprises an Entity Identification State, an Environment State and a Behavior Pattern State.

18. The data processing system of claim 1 wherein said server further comprises a post-trade processor for receiving and organizing said trade information, said receiving and said organizing being guided by said control logic.

19. The data processing system of claim 1 wherein said server further comprises a command vector processor for presenting said trade information on said workstations, said presenting being guided by said control logic.

20. The data processing system of claim 1 wherein said server further comprises a commission calculation processor for allocating commission payments and awards to traders of said items, said allocating being guided by said control logic.

21. The data processing system of claim 1 wherein said server further comprises:
a post-trade processor for receiving and organizing said trade information, said receiving and said organizing being guided by said control logic;
a command vector processor for presenting said trade information on said workstations, said presenting being guided by said control logic; and
a commission calculation processor for allocating commission payments and awards to traders of said items, said allocating being guided by said control logic..

22. The data processing system of claim 1 wherein said control logic is adapted to enable customers in different locations at different times to participate in trading said items.

23. A data processing system for implementing a commission allocation process in transacting the purchase and sale of select items, said items having a predetermined set of characteristics, said system comprising:
a plurality of workstations for presenting trade information relating to said items;
a server programmed to support a control logic having at least one state, said at least one state being based on a set of predefined state attributes relating to said trade information, said control logic that implements a commission vector, said commission vector that receives said trade information from said plurality of workstations based on said state attributes, and that determines a commission based on said trade information; and
a plurality of communications links for linking said server to said workstations.

24. The data processing system of claim 23 wherein said commission vector comprises a plurality of alphanumeric elements relating to said trade information.
